# EUROPÄISCHE PATENTSCHRIFT

(11) **EP 1 352 454 B1**
(45) Veröffentlichungstag und Bekanntmachung des Hinweises auf die Patenterteilung: **27.10.2004**
(21) Anmeldenummer: 01990339.2
(22) Anmeldetag: 20.12.2001
(51) Int. Cl.: H01S 3/10

(54) **LASERSTRAHLQUELLE**
LASER BEAM SOURCE
SOURCE DE RAYONNEMENT LASER

(30) Priorität: 28.12.2000 DE 10065529
(43) Veröffentlichungstag der Anmeldung: 15.10.2003
(73) Patentinhaber: ROBERT BOSCH GMBH, 70442 Stuttgart (DE)
(72) Erfinder: WAIS, Johannes, 71701 Schwieberdingen (DE); WAWRA, Thomas, 89558 Beohmkirch (DE)
(86) Internationale Anmeldenummer: PCT/DE2001/004816
(87) Internationale Veröffentlichungsnummer: WO 2002/054547

(56) Entgegenhaltungen:
- EP-A- 0 065 223
- DE-A- 3 705 971
- DE-A- 4 202 941
- US-A- 4 560 856
- US-A- 5 575 935
- PATENT ABSTRACTS OF JAPAN vol. 012, no. 024 (E-576), 23. Januar 1988 (1988-01-23) -& JP 62 179786 A (TOSHIBA CORP), 6. August 1987 (1987-08-06)
- PATENT ABSTRACTS OF JAPAN vol. 011, no. 288 (E-542), 17. September 1987 (1987-09-17) -& JP 62 086851 A (NEC CORP), 21. April 1987 (1987-04-21)
- PATENT ABSTRACTS OF JAPAN vol. 1998, no. 09, 31. Juli 1998 (1998-07-31) -& JP 10 098228 A (SUMITOMO METAL MINING CO LTD), 14. April 1998 (1998-04-14)

## Beschreibung

Die Erfindung betrifft eine Laserstrahlquelle zur Abstrahlung von Laserpulsen nach dem Oberbegriff des Anspruchs 1, wie sie aus der US 4 560 856 A bekannt ist. Zur Abstrahlung von Laserpulsen zu einem wählbaren Zeitpunkt und für eine wählbare Zeitdauer ist bei der bekannten Laserstrahlquelle zwischen dem Endspiegel und dem laseraktiven Medium ein steuerbarer Verschluß angeordnet, der im Schließzustand den Resonator deaktiviert. Sobald der Verschluß geöffnet wird, wird der Resonator freigegeben. Der Anschwingvorgang des laseraktiven Mediums setzt ein, und das Medium gibt durch den Auskoppelspiegel hindurch Laserpulse ab. Bei der vorbekannten Laserstrahlquelle wird somit zur Deaktivierung des Resonators ein separater Verschluß verwendet, der den Laserstrahl unterbricht.

Aus der JP 62 179 786 A ist ferner eine Laserstrahlquelle mit einem laseraktiven Medium bekannt, die einen drehbaren Spiegel aufweist. Mittels des drehbaren Spiegels lassen sich Laserpulse mit unterschiedlichen Wellenlängen erzeugen.

Aufgabe der Erfindung ist es, die vorbekannte Laserstrahlquelle derart weiterzubilden, dass eine Abstrahlung von Laserpulsen zu einem wählbaren Zeitpunkt und für eine wählbare Zeitdauer erzielt werden kann, ohne dass dafür ein separater Verschluss benötigt wird. Diese Aufgabe wird entsprechend den kennzeichnenden Merkmalen des Anspruchs 1 im Wesentlichen durch einen schwenkbar gelagerten Resonatorspiegel gelöst. Der Resonatorspiegel ist in eine Resonatorposition schwenkbar, in der er den von dem laseraktiven Medium eintreffenden Laserstrahl in sich selbst zum laseraktiven Medium zurückreflektiert. Weiterhin ist der Resonatorspiegel in eine von der Resonatorposition abweichende Position schwenkbar, in der der auf den Schwenkspiegel auftreffende Laserstrahl so abgelenkt wird, dass er nicht mehr zum laseraktiven Medium zurückreflektiert wird. Durch die letztgenannte Position des Resonatorspiegels wird der Resonator somit ebenso deaktiviert wie durch den bei der US 4 560 856 A bekannten Verschluß. Durch die Verwendung des schwenkbaren Resonatorspiegels läßt sich somit gegenüber dem Stand der Technik eine Bauteilereduzierung erzielen.

Vorteilhafte Weiterbildungen der erfindungsgemäßen Laserstrahlquelle zur Abstrahlung von Laserpulsen sind in den abhängigen Ansprüchen aufgeführt.

### Zeichnung

Die Erfindung ist anhand von in der Zeichnung dargestellten Ausführungsbeispielen in der nachfolgenden Beschreibung näher erläutert. Es zeigen:

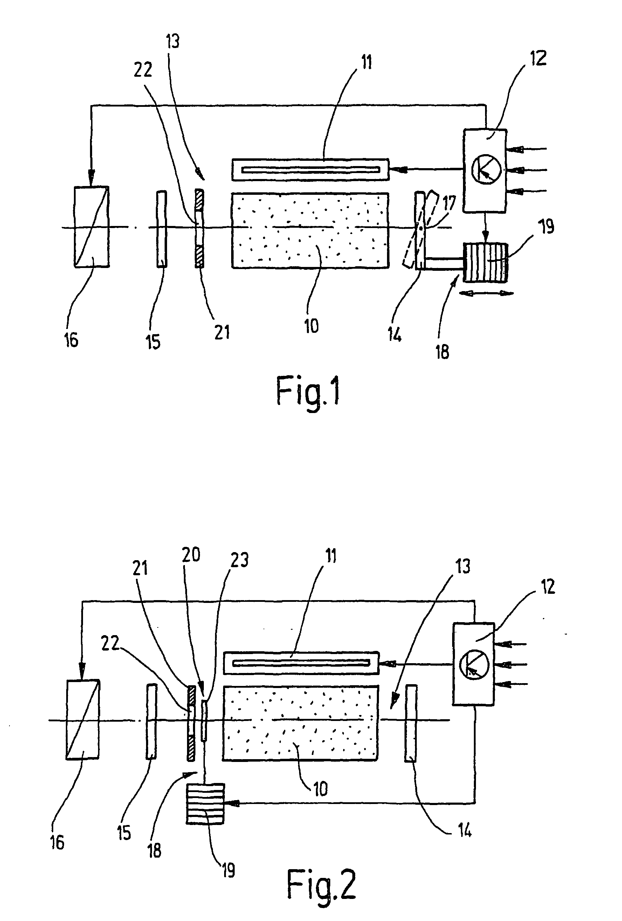

- Fig. 1 bis 4: jeweils ein Blockschaltbild einer Laserstrahlquelle in vier verschiedenen Ausführungsbeispielen.

### Beschreibung der Ausführungsbeispiele

Die in Fig. 1 dargestellte Laserstrahlquelle zur Abstrahlung von Laserpulsen, die insbesondere für Werkstoff- oder Materialbearbeitung eingesetzt wird, weist in bekannter Weise ein laseraktives Medium 10 auf, das durch Energiezufuhr aus einem Zustand des thermodynamischen Gleichgewichts in einen laseraktiven Zustand überführt wird. Die Energiezufuhr erfolgt mittels einer steuerbaren Pumpvorrichtung 11, die von einer Steuereinheit 12 getaktet wird, wobei durch Taktrate und Dauer der Steuerimpulse die Pulszahl, die Pulsfrequenz und die Pulsdauer der Laserstrahlquelle variiert werden kann. Bei sog. Festkörperlasern, z.B. bei dem in der industriellen Materialbearbeitung wichtigsten Vertreter, dem Nd:YAG-Laser, wird das laseraktive Medium 10 mit einem Kristall realisiert, der mit Metall-Ionen oder Ionen seltener Erden als laseraktives Medium gedopt ist. Beim Nd:YAG-Laser ist der sog. Wirts kristall ein Yttrium-Aluminium-Granat, bei dem im Kristallgitter Y-Ionen durch Nd-Ionen (Neodym) ersetzt werden. Die Pumpvorrichtung 11 kann eine Blitzlampe oder eine Diode sein, die gepulst gesteuert wird und den Festkörper bzw. den Kristall beleuchtet. Mittels eines Resonators 13, der im einfachsten Fall aus einem total reflektierenden Endspiegel 14 und einem teildurchlässigen Auskoppelspiegel 15 besteht, wird ein Teil der von der Pumpvorrichtung 11 zur Verfügung gestellten Anregungsenergie durch den Lasereffekt als elektromagnetische Strahlung in Form von Laserimpulsen ausgekoppelt. Der Resonator 13 hat dabei die Aufgabe, das Laserlicht mehrfach durch das laseraktive Medium 10 zu schicken, wodurch ein Verstärkungsprozeß einsetzt und der Laser anschwingt, also Laseroszillation einsetzt. In diesem Zustand stellt sich ein Gleichgewicht zwischen der dem laseraktiven Medium 10 zugeführten und der durch den Auskoppelspiegel 15 in Form von Laserstrahlung abgegebenen Energie ein. Dem Auskoppelspiegel 15 ist in Strahlrichtung noch ein sog. Shutter 16 nachgeordnet, der eine Schutzfunktion hat und bei abgeschalteter Laserstrahlquelle geschlossen ist. Mit Einschalten der Laserstrahlquelle wird der Shutter 16 von der Steuereinheit 12 aufgesteuert. Eine zwischen dem laseraktiven Medium 10 und dem Auskoppelspiegel 15 angeordnete Blende 21 mit Blendenöffnung 22 dient zur Verbesserung der Strahlqualität der Laserstrahlung.

Um einen Abbrand des Shutter 16 durch Laserpulse zu vermeiden, wird die Steuerung des Shutters 16 mit der Steuerung der Pumpvorrichtung 11 so in Einklang gebracht, daß zuerst der Shutter 16 öffnet und dann die Pumpvorrichtung 11 das laseraktive Medium 10 pumpt. Um zu verhindern, daß bei dem zu Beginn des Pumpens einsetzenden, thermischen Einschwingprozeß im laseraktiven Medium 10, das sich noch nicht im thermischen Gleichgewicht befindet, Laserpulse mit Pulsenergieschwankungen abgestrahlt werden, sind im Resonator 13 Blockiermittel zum Unterdrücken des Anschwingvorgangs des laseraktiven Mediums 10 angeordnet, die zu wählbaren Zeitpunkten für eine wählbare Zeitspanne deaktivierbar sind. Die Zeitpunkte der Deaktivierung der Blockiermittel sind dabei so gelegt, daß der thermische Einschwingprozeß des laseraktiven Mediums 10 abgeschlossen ist und dieses sein thermisches Gleichgewicht erreicht hat. Die gewählte Zeitspanne richtet sich nach der Bearbeitungsdauer. Die Deaktivierung findet dabei vorteilhaft zwischen zwei Beleuchtungspulsen der Blitzlampe oder Diode statt.

Im Ausführungsbeispiel der Fig. 1 weisen die Blockiermittel eine Schwenklagerung 17 des Endspiegels 14 im Resonator 13 und einen den schwenkgelagerten Endspiegel 14 verstellenden Aktuator 18 auf, der hier als ein von der Steuereinheit 12 gesteuerter Piezosteller 19 ausgeführt ist. Solange der Anschwingprozeß des laseraktiven Mediums 10 trotzt Pumpen durch die Pumpvorrichtung 11 unterdrückt bleiben soll, die Blockiermittel also wirksam sind, nimmt der Endspiegel 14 seine in Fig. 1 strichliniert dargestellte Stellung ein, in welcher er aus seiner Resonatorposition ausgeschwenkt ist. Die Resonatorposition ist dadurch definiert, daß die Normalen der beiden Resonatorspiegel 14, 15 miteinander fluchten oder parallel zueinander ausgerichtet sind, so daß ein in dem laseraktiven Medium 10 spontan emittierter Wellenzug der elektromagnetischen Wellen durch Reflexion an den beiden Resonatorspiegeln 14, 15 das Medium 10 mehrfach durchläuft und infolge induzierter Emission solange verstärkt wird, bis die sog. Laseroszillation einsetzt. Ist der Endspiegel 14 in seine in Fig. 1 strichlinierte Position überführt, so wird der zu ihm gelangende, vom laseraktiven Medium 10 in Achsrichtung emittierte Wellenzug in eine andere Richtung reflektiert und gelangt nicht zurück zu dem Medium 10. Damit kann der Verstärkungsprozeß nicht einsetzen und der Laser nicht anschwingen.

Wird für die Materialbearbeitung eine Laserpulsfolge benötigt, so steuert die Steuereinheit 12 den Piezosteller 19 an, und dieser schwenkt den Endspiegel 14 in die in Fig. 1 ausgezogen dargestellte Resonatorposition, in der der vorstehend beschriebene Verstärkungsprozeß einsetzt und die Laserstrahlquelle die Pulsfolge abstrahlt. Die Aussteuerung des Piezostellers 19 erfolgt dabei zwischen zwei aufeinanderfolgenden Beleuchtungspulsen der Blitzlampe oder Diode, so daß der Rückführprozeß des Endspiegels 14 abgeschlossen ist, wenn der zweite Beleuchtungsimpuls abgestraht wird. Da nur der Anschwingprozeß des Mediums 10 blockiert worden ist, nicht aber das Pumpen des Mediums 10 durch die Pumpvorrichtung 11, befindet sich das Medium 10 bei Einschwenken des Endspiegels 14 in dessen Resonatorposition im thermischen Gleichgewicht, und alle von der Laserstrahlquelle abgestrahlten Laserpulse haben die gleiche, konstante Pulsenergie.

Es ist selbstverständlich möglich, anstelle des Endspiegels 14 auch den Auskoppelspiegel 15 mit einer Schwenklagerung zu versehen und mit dem Piezosteller 19 zu koppeln. Die Wirkungsweise ist die gleiche, wie vorstehend beschrieben.

In dem Ausführungsbeispiel der Fig. 2 weisen die Blockiermittel zum Unterdrücken des Anschwingprozesses des laseraktiven Mediums 10 einen Verschluß 20 und einen den Verschluß 20 betätigenden Aktuator 18 auf. Der Aktuator 18 ist wiederum als Piezosteller 19 ausgeführt, der zum Öffnen und Schließen des Verschlusses 20 von der Steuereinheit 12 angesteuert wird. Der zwischen dem Auskoppelspiegel 15 und dem laseraktiven Medium 10 angeordnete Verschluß 20 verhindert im Schließzustand ebenfalls das Anschwingen des Mediums 10, da durch das Abschirmen des Auskoppelspiegels 15 gegenüber dem Medium 10 der vorstehend beschriebene Verstärkungs- und Oszillationsprozeß nicht einsetzen kann. Erst wenn der Verschluß 20 geöffnet ist, sind die Anschwingbedingungen für den Laser hergestellt, und die Laserstrahlquelle strahlt die Laserpulse ab, wobei bereits der erste Laserimpuls die gleiche Pulsenergie aufweist wie die folgenden.

Der Verschluß 20 kann in verschiedener Weise ausgeführt werden. Im Ausführungsbeispiel der Fig. 2 weist der Verschluß 20 eine Blende 21 und eine die Blendenöffnung 22 abdeckende Abschirmplatte 23 auf, die von dem Piezosteller 19 quer zur Resonatorachse bewegt wird und so aus dem Resonator 13 heraus- oder in den Resonator 13 hineinbewegt werden kann. Die Bewegung kann durch Querverschieben oder Schwenken der Abschirmplatte 23 ausgeführt werden. Bei Abruf einer Laserpulsfolge steuert die Steuereinheit 12 zunächst den Shutter 16 auf und bewegt anschließend die Abschirmplatte 23 aus dem Resonator 13 heraus, so daß die Anschwingbedingungen im Resonator 13 hergestellt sind.

Selbstverständlich ist es auch möglich, den Verschluß 20 bzw. die Abschirmplatte 23 zwischen dem laseraktiven Medium 10 und dem Endspiegel 14 anzuordnen und in gleicher Weise mit dem von der Steuereinheit 12 gesteuerten Piezosteller 19 zu betätigen.

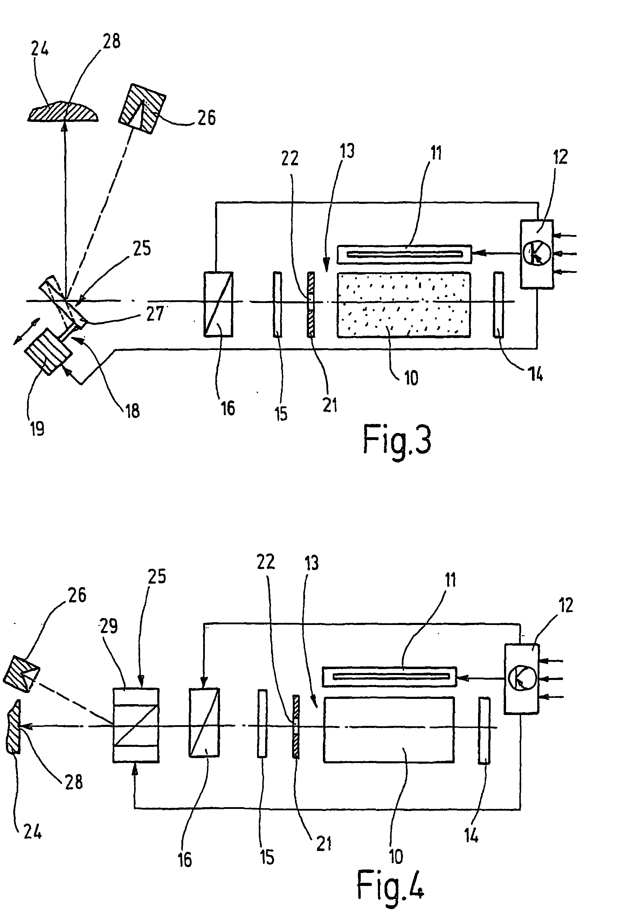

Bei den Ausführungsbeispielen der Laserstrahlquelle gemäß Fig. 3 und 4 ist zur Erzeugung von Laserpulsen konstanter, nicht schankender Pulsenergie nicht in den Resonator 13 eingegriffen, sondern im Laserstrahlengang von der Laserstrahlquelle zu einem zu bearbeitenden Werkstück 24 ein Ablenkorgan 24 angeordnet, das bei seinem Aktivieren die Strahlrichtung der Laserimpulse so verlegt, daß sie nicht zum Werkstück 24, sondern zu einem sog. Strahlsumpf 26 gelangen, in dem die Pulsenergie vernichtet wird. Zum Abruf von Laserimpulsen zu dem Werkstück 24 wird die Aktivierung des Ablenkorgans 25 wieder aufgehoben, so daß die Laserpulse auf die Bearbeitungsstelle 28 am Werkstück 24 auftreffen. Da der Laser bereits in Betrieb ist, wenn der erste Laserpuls zur Bearbeitungsstelle 28 abgerufen wird, haben alle Laserpulse von Anfang an die gleiche Pulsenergie. Der Aufbau des Resonators 13 mit Blitzlampe 11, Steuereinheit 12 und dem Auskoppelspiegel 15 vorgeordneter Blende 21 und nachgeordnetem Shutter 16 ist unverändert, so daß gleiche Bauteile mit gleichen Bezugszeichen versehen sind.

Im Ausführungsbeispiel der Fig. 3 ist das Ablenkorgan 25 als ein von einem Aktuator 18 in zwei Schwenkstellungen überführbarer Umlenkspiegel 27 ausgebildet. Die Ausrichtung des Umlenkspiegels 27 in dessen beiden Schwenkstellungen ist in Übereinstimmung mit dem Vorhergesagten dann so vorgenommen, daß die Strahlrichtung der Laserpulse in der einen Schwenkstellung auf die Bearbeitungsstelle 28 am Werkstück 24 und in der anderen Schwenkstellung auf den Strahlsumpf 26 gerichtet ist. Der Aktuator 18 ist vorzugsweise wieder als Piezosteller 19 ausgebildet, der den Umlenkspiegel 27 nur um kleine Schwenkwinkel verstellen muß. Selbstverständlich ist es möglich, den Umlenkspiegel 27 so auszurichten, daß er bei unerregtem Piezosteller 19 die in Fig. 3 strichlinierte Position einnimmt und durch den von der Steuereinheit 12 mit einem Steuersignal beaufschlagten Piezosteller 19 in die in Fig. 3 ausgezogen dargestellte Schwenkstellung überführt wird.

Im Ausführungsbeispiel der Fig. 4 ist das Ablenkorgan 25 als akustooptischer Modulator 29 ausgebildet. Ein solcher akustooptischer Modulator ist beispielsweise in dem Katalog "Akusto-Optik", 1999, der Fa. ELS Elektronik Lasersystem GmbH, Groß-Zimmern, in Aufbau und Funktionsweise beschrieben. Ein solcher akustooptischer Modulator besteht aus einer Bragg-Zelle, in der die Interaktion zwischen Schall und licht stattfindet. Die Schalleistung wird mittels eines Transducers in die Bragg-Zelle eingekoppelt. Wird die Bragg-Zelle mit einer entsprechenden Hochfrenquenzleistung angesteuert, so bilden sich im Innern der Zelle periodische Änderungen des Brechnungsindexes. Der durchtretenden Laserstrahl oder Laserpuls wird durch diese Brechungsindexänderung gebeugt und von der Bearbeitungsstelle 28 weg zum Strahlsumpf 26 geführt. Im übrigen entspricht der Aufbau der Laserstrahlquelle der in Fig. 3 beschriebenen, so daß gleiche Bauteile mit gleichen Bezugszeichen versehen sind.

## Patentansprüche

1. Laserstrahlquelle zur Abstrahlung von Laserpulsen, insbesondere für die Materialbearbeitung, mit einem laseraktiven Medium (10), einer Pumpvorrichtung (11) zur Anregung des Mediums (14), einem Resonator (13) zum Anschwingen des Mediums (10), der einen Endspiegel (14) und einen. Auskoppelspiegel (15) mit jeweils zum Medium (10) achsparalleler Ausrichtung aufweist, und mit einer Steuereinheit (12) zum Steuern der Pulszahl, Pulsfrequenz und Pulsdauer, **dadurch gekennzeichnet, dass** einer der Resonatorspiegel (14) schwenkbar gelagert ist und an dem schwenkgelagerten Resonatorspiegel (14) ein von der Steuereinheit (12) angesteuerter Aktuator (18) zum Schwenken des Resonatorspiegels (14) aus dessen Resonatorposition und zum Zurückschwenken des Resonatorspiegels (14) in dessen Resonatorposition zu wählbaren Zeitpunkten angreift.

2. Laserstrahlquelle nach Anspruch 1, **dadurch gekennzeichnet, dass** der Aktuator (18) von der Steuereinheit (12) so gesteuert ist, dass das Zurückschwenken des Resonatorspiegels (14) zwischen zwei Anregungspulsen der Pumpvorrichtung (11) erfolgt.

3. Laserstrahlquelle nach Anspruch 1 oder 2, **dadurch gekennzeichnet, dass** der Aktuator (18) einen Piezosteller (19) aufweist.

## Claims

1. Laser beam source for emitting laser pulses, in particular for material processing, having a laser-active medium (10), a pumping apparatus (11) for stimulation of the medium (10), a resonator (13) for causing the medium (10) to oscillate, which'has an end mirror (14) and an output mirror (15) which are each aligned parallel to the axis of the medium (10), and having a control unit (12) for controlling the number of pulses, the pulse frequency and the pulse duration, **characterized in that** one of the resonator mirrors (14) is mounted such that it can pivot, and an actuator (18) which is driven by the control unit (12) acts on the resonator mirror (14) which is mounted such that it can pivot, in order to pivot the resonator mirror (14) from its resonator position and in order to pivot the resonator mirror (14) back to its resonator position at times which can be selected.

2. Laser beam source according to Claim 1, **characterized in that** the actuator (18) is controlled by the control unit (12) such that the resonator mirror (14) is pivoted back between two stimulation pulses from the pumping apparatus (11).

3. Laser beam source according to Claim 1 or 2, **characterized in that** the actuator (18) has a piezo-controller (19).

## Revendications

1. Source de rayonnement laser pour le rayonnement d'impulsions laser, en particulier pour l'usinage de matériaux, comportant un milieu laser actif (10), un dispositif de pompage (11) permettant d'exciter le milieu (10), un résonateur (13) permettant de générer des oscillations du milieu (10), qui présente un miroir d'extrémité (14) et un miroir de sortie (15) ayant respectivement une orientation parallèle à l'axe du milieu (10), et comportant une unité de commande (12) permettant de commander le nombre d'impulsions, la fréquence des impulsions et la durée des impulsons,
**caractérisée en ce que**
l'un des miroirs de résonateur (14) est pivotant et un actionneur (18) commandé par l'unité de commande (12) s'engrène avec le miroir de résonateur (14) pivotant pour le pivoter hors de sa position de résonateur et pour le pivoter en retour dans la position de résonateur, à des moments choisis.

2. Source de rayonnement laser selon la revendication 1,
**caractérisée en ce que**
l'actionneur (18) est commandé par l'unité de commande (12) pour pivoter en retour du miroir de résonateur (14) entre deux impulsions d'excitation du dispositif de pompage (11).

3. Source de rayonnement laser selon la revendication 1 ou 2,
**caractérisée en ce que**
l'actionneur (18) présente un élément d'actionnement piézoélectrique (19).
